# EUROPEAN PATENT SPECIFICATION

(11) **EP 3 073 198 B1**
(45) Date of publication and mention of the grant of the patent: **25.12.2019**
(21) Application number: 15161382.5
(22) Date of filing: 27.03.2015
(51) Int. Cl.: F23R 3/36, F23R 3/28, F02C 7/22

(54) **INTEGRATED DUAL FUEL DELIVERY SYSTEM**
INTEGRIERTES ZWEIKRAFTSTOFFFÖRDERSYSTEM
SYSTÈME DE DISTRIBUTION BICARBURANT INTÉGRÉ

(43) Date of publication of application: 28.09.2016
(73) Proprietor: Ansaldo Energia Switzerland AG, 5401 Baden (CH)
(72) Inventor: Heynen, Fridolin, 5303 Würenlingen (CH); Maiztegui, Inaki, 5400 Baden (CH)
(74) Representative: Bernotti, Andrea

(56) References cited:
- EP-A1- 2 189 720
- US-A- 4 201 046
- US-A- 4 467 610
- US-A- 5 361 578
- US-A1- 2009 277 182
- US-A1- 2013 291 547

## Description

### TECHNICAL FIELD

The present invention relates to a fuel delivery system, and more particularly the invention relates to dual fuel delivery system for a gas turbine engine.

### BACKGROUND

Modern gas turbines may operate on a number of different fuels, such as various kinds of liquid and gaseous fuels. For this reason, power plants may have gas turbine engines that can operate with dual fuel capability, for example, natural gas and diesel fuel. In general, the choice of the operational fuel depends on the price, availability and operational parameters.

Gas turbines comprise various types of combustors configured to produce a hot gas by burning a fuel in a compressed air. The fuel is introduced in the combustor using one or more fuel nozzles. To provide an operational flexibility, the nozzles usually have capabilities to inject a dual fuel.

Dual fuel has to be delivered to the fuel nozzles from the fuel source. Design of such dual fuel delivery systems has various challenges such as: space constraints, vibrational instabilities and thermal expansions.

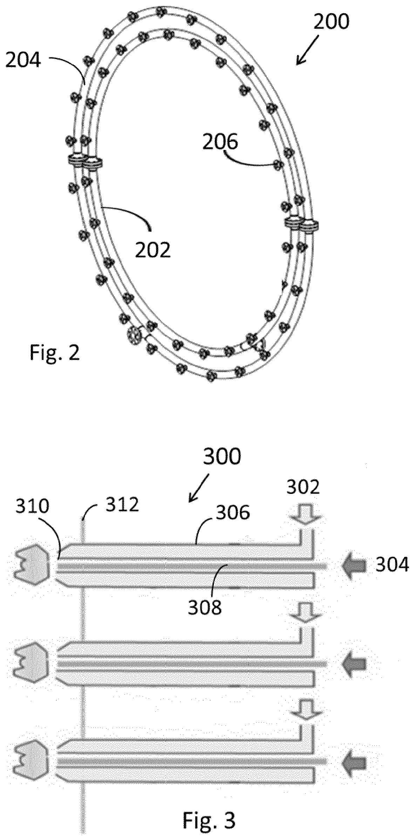

Figure 2 shows a fuel delivery system 200 comprising two fuel ring pipes, 202 and 204. Each of the ring pipes, 202 and 204, supplies one type of the fuel, and each pipe has plurality of fuel feeds 206 which are connected to combustor burners (not shown) of a gas turbine. In the configuration where every burner has one lance, one fuel line from each of the ring pipes 202 and 204 supplies two types of the fuel to the single burner. This design results in the high level of complexity and high number of supply lines and connections. Figure 3 shows dual fuel supply system 300 for a burner 312 having several (in this example three) injection nozzles 310. Two types of fuel, 302 and 304, are supplied to every nozzle 310. Fuel 302 is supplied via a first fuel line 306, while second fuel 304 is supplied via a second fuel line 308. Similarly to the design from figure 2, this fuel delivery system is not compact and it could suffer from thermal and vibrational instabilities. Another kind of dual fuel delivery system is disclosed in document EP 1289720.

A further dual fuel delivery system for a gas turbine is disclosed in document US 2000/0277182 A1.

What is desired, therefore, is a dual fuel delivery system that is simpler and more efficient than the systems from the prior art.

### SUMMARY OF THE INVENTION

In view of the above mentioned problems, it is primary object of the present invention to provide an improved dual fuel delivery system for a gas turbine engine.

One object of the present invention is to provide improved dual fuel delivery system in terms of the complexity and space saving.

Another object of the present invention is to provide improved dual fuel delivery system in terms of thermal and vibrational stability.

Yet another object of the present invention is to provide improved dual fuel system particularly adapted to substantially rectangular shaped burners.

The above and other objects of the invention are achieved by a dual fuel delivery system according to independent claim 1 and by a method of delivering dual fuel according to independent claim 12.

According to an embodiment, the first fuel divider is positioned in a first plane and the second fuel divider is positioned in a second plane, and the first plane is different from the second plane. In one embodiment which is not part of the present invention, these two planes are substantially at 90 degrees angle. This configuration is particularly advantageous regarding space saving inside a gas turbine.

According to another embodiment, both the first fuel oil divider and the first fuel gas divider, have one inlet and two outlets.

According to yet another embodiment, the main fuel gas conduit comprises an extension means, preferably metallic bellows. This configuration is particularly advantageous regarding problem of thermal expansions.

According to another embodiment, the first fuel oil divider comprises at least one extension means, such as a metallic hose or an extension joint.

According to yet another embodiment, a connection between the main fuel oil conduit and the first fuel oil divider comprises a horizontal sliding guide, and/or a connection between the first fuel oil divider and the second fuel oil divider comprises a vertical sliding guide.

In one preferred embodiment, the injection head comprises plurality of injection sections, wherein every injection section is connected to one outlet of the first fuel divider or the second fuel divider.

According to yet another embodiment, the dual fuel delivery system comprises fuel manifold connected to the inlet of the main fuel line, and adapted to supply fuel gas and fuel oil to the main fuel line.

The present application also relates to a gas turbine comprising dual fuel delivery system. In one preferred embodiment, a gas turbine comprises a can combustor, a cooling air housing, and a burner adapted to receive the injection head, wherein the inlet of the main fuel line is positioned outside the can housing, the outlet of the main fuel line and the inlet to the first fuel divider are positioned between the can housing and the cooling air housing.

In addition, the present invention also provides for a method for delivering dual fuel to the burner of the gas turbine comprising the dual fuel delivery system. The method comprises following steps: supplying fuel oil and/or fuel gas to the main fuel line, dividing the fuel oil and/or the fuel gas in the first fuel divider, and guiding fuel oil and/or fuel gas to the burner.

Additional advantages and features of the present invention will be set forth in part in a description which follows, and in part will become apparent to those skilled in the art upon examination of the following, or may be learned from practice of the invention. The instant invention will now be described with particular reference to the accompanying drawings.

### BRIEF DESCRIPTION OF DRAWINGS

Preferred embodiments of the invention are described in the following with reference to the drawings, which are for the purpose of illustrating the present preferred embodiments of the invention and not for the purpose of limiting the same. In the drawings,
Figure 1 is a schematic diagram of a gas turbine according to the invention.
Figure 2 is a perspective view of dual ring fuel delivery system from prior art.
Figure 3 is a schematic diagram of a fuel delivery system from prior art.
Figure 4 is a schematic representation of a dual fuel delivery system according to one embodiment of the present invention.
Figure 5 is a perspective view of a part of a dual fuel delivery system according to one embodiment of the present invention.
Figure 6 is a perspective view of a dual fuel delivery system according to one embodiment of the present invention.
Figure 7 is a perspective view of a part of a dual fuel delivery system according to one embodiment of the present invention.
Figure 8 is a perspective view of a rectangular burner adapted to receive injection nozzle head.
Figure 9 is a schematic representation of a dual fuel delivery system inside a gas turbine according to one embodiment the present invention.

### DETAILED DESCRIPTION OF THE DRAWINGS

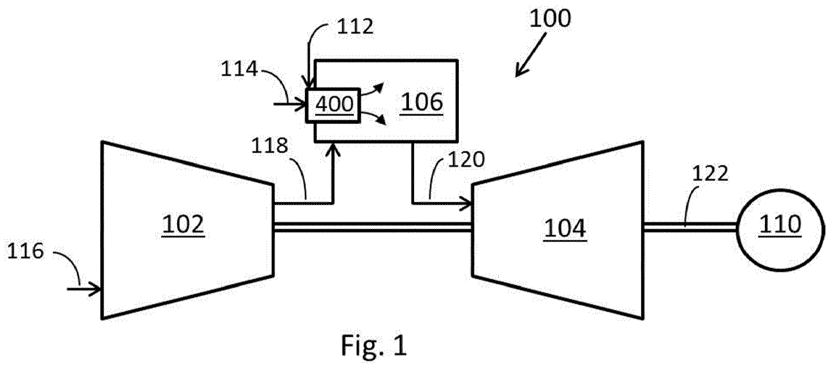

Referring now to the drawings, in which like numerals refer to like elements throughout the several views, figure 1 shows a schematic view of gas turbine engine 100 according to one embodiment of the invention. The gas turbine 100 is comprised of a compressor 102, which compresses a flow of air 116. The compressed air 118 is directed to a combustor 106 which may comprise several combustor cans and burners. In the combustor 106, the compressed air 118 is mixed with fuel oil 112 or fuel gas 114, and the mixture of air and fuel is ignited to create a flow of hot combustion gases 120, which are directed to drive a turbine 104. The mechanical work produced in the turbine 104 drives the compressor 102 and load 110 via a shaft 122. Fuels 112 and 114 are delivered to the combustor 106 via a dual fuel delivery system 400 according to the invention.

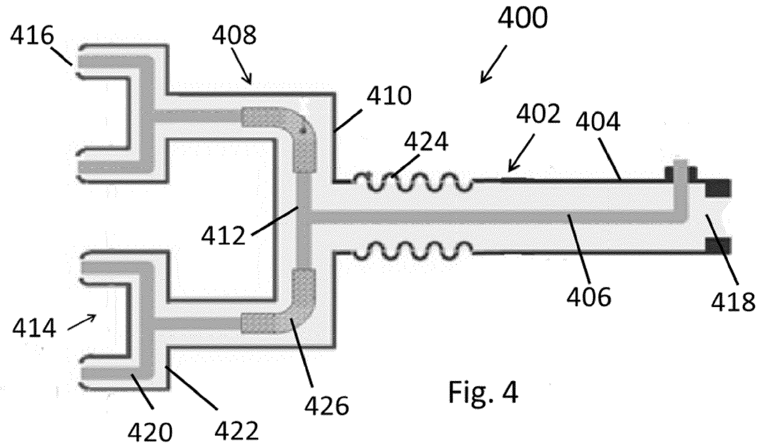

Figure 4 shows the dual fuel delivery system 400 according to the invention, which may be used with the gas turbine 100. The dual fuel delivery system 400 comprises a main fuel line 402 having a main fuel oil conduit 406 and a main fuel gas conduit 404. In the preferred embodiment shown in figure 4, the conduits 404 and 406 are in the form of two concentric conduits, wherein the main fuel gas conduit 404 completely encloses the main fuel oil conduit 406, except for the entry section of the conduit 406. In general, the main fuel gas conduit 404 encloses at least partially the main fuel oil conduit 406.

The dual fuel delivery system 400 comprises also a first fuel divider 408, having a first fuel oil divider 412 connected to the main fuel oil conduit 406 and a first fuel gas divider 410 connected to the main fuel gas conduit 404. In general, a fuel divider is a device for dividing a fuel flow, and it has one inlet and two or more outlets. The number of branches of the divider is equal to the number of the outlets. The fuel flow may be divided equally or non-equally among the branches. The first fuel gas divider 410 encloses, at least partially, the first fuel oil divider 412. In the preferred embodiment, shown in figure 4, the first fuel gas divider 410 encloses completely the first fuel oil divider 412. Every branch of the fuel gas divider 410 is enclosing a corresponding branch of the fuel oil divider 412. The corresponding branches may be in the form of the concentric conduits. In the operation, the fuel oil supply channel (main fuel oil line and fuel oil divider) is advantageously protected by the fuel gas supply channel (main fuel gas line and fuel gas divider) against the hot air stream. In the preferred embodiment, the fuel divider 408 has one inlet and two outlets, but more outlets are also possible.

The dual fuel delivery system 400 has a second fuel divider 414. According to the invention, there are two second fuel dividers 414. The purpose of these dividers is to further divide fuel flows coming from the main line 402. The second dividers 414 have one inlet and two outlets. The second fuel divider 414 has a second fuel oil divider 420 and a second gas fuel divider 422. One outlet of the first fuel divider 408 is connected to an inlet of the second fuel divider 414. In this configuration, system 400 has one inlet 418 (main fuel line inlet) and four outlets 416 i.e. both of the fuels, fuel gas and fuel oil, may be separated in four separated flows.

Additional advantageous features which contribute to avoid thermal expansions and negative vibrational effects are also shown in figure 4. Firstly, the main fuel gas conduit 404 may comprise an extension means, preferably a metallic bellows 424. Secondly, the first fuel oil divider 412 may have an extension means, such as at least one metallic hose 426, or an expansion joint. Preferably the divider 412 has two metallic hoses 426, wherein one hose is comprised in every branch of the divider 412. Other combinations of bellows and hoses in the main line 402 and/or in the different branches of any of the dividers are also possible.

Figure 4 is a schematic, simplified and two-dimensional representation of the dual fuel delivery system 400. The main fuel line 402 and fuel dividers 408 and 414 are not necessarily all positioned in one plane. In general, the fuel divider 408 is positioned in a first plane and the fuel divider 414 is positioned in a second plane.

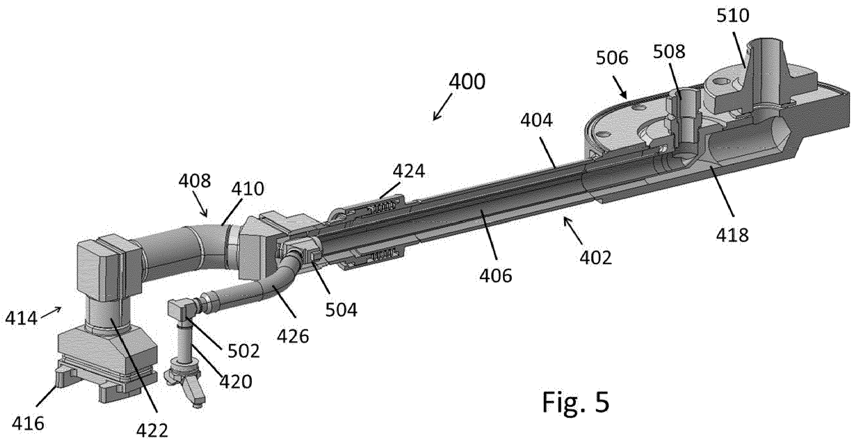

Figure 5 shows in more detail part of (and interior of) the dual fuel delivery system 400 according to one preferred embodiment of the present invention. Contrary to the example of figure 4 where the first fuel divider 408 and the second fuel divider 414 are positioned in one plane i.e., the first plane and the second plane are same planes, the second fuel divider 414 and the first fuel divider 408 of an embodiment in figure 5 are advantageously positioned in different planes i.e. the first plane is different from the second plane. In the preferred embodiment shown in figure 5, inlet of the second fuel divider 414 and one outlet of the first fuel divider 408 are connected substantially at a 90 degrees angle. In this way, dual fuel delivery system 400 has advantageously a more compact size, which reduces a need for a large space inside the gas turbine 100.The two planes, the first plane and the second plane, may be inclined to each other at an angle >10 degrees, preferably greater of 50 degrees up to 90 degrees. Another advantage of having fuel dividers 408 and 414 in different planes instead in one plane is an additional degree of flexibility to compensate for thermal extension and/or vibrations in different directions. Other designs, depending of the geometry of the gas turbine, are possible, without departing from the main concept of the invention.

In addition, as shown in figure 5, a connection between the main fuel oil conduit 406 and the first fuel oil divider 412 may have a horizontal sliding guide 504. Advantageously, a connection between the first fuel oil divider 412 and the second fuel oil divider 414 may have a vertical sliding guide 502. The use of the sliding guides 502 and 504 helps to guide the relative movements of the metal hoses 426 inside a gas turbine engine. Figure 5 shows also a fuel manifold 506 connected to the inlet of the main fuel line 402. The manifold 506 is used to supply the fuel gas and the oil gas to the main fuel line 402 via fuel oil inlet 508 and fuel gas inlet 510. The inlets 508 and 510 are in general connected to the external fuel gas and fuel oil supply (not shown).

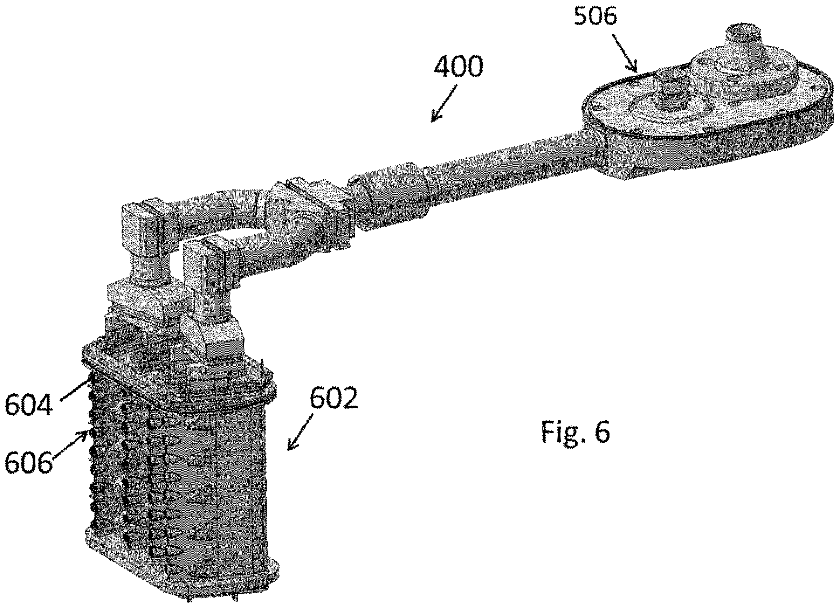

Figure 6 shows perspective view of the dual fuel delivery system 400 according to the present invention. Figure 6 shows only external part of the system 400, without showing internal gas oil conduits and dividers. In this embodiment according to the invention, the system 400 comprises also an injection head 602. The role of the injection head 602 is to inject the fuel into a burner. The injection head 602 comprises one or more injection nozzles 604 adapted to inject the fuel oil and/or the fuel gas. The injection head 602 is connected to the second fuel dividers 414. The dual fuel from the manifold 506 may be guided to the nozzles 604. In the one preferred embodiment of the invention, the injection head 602 comprises plurality of fuel injection sections 606. In the embodiment shown in figure 6, there are 4 fuel injection sections 606, each section having nine nozzles 604. One example of the injection section 606 is described in patent application EP 2496883A2. In this example shown in figure 6, the injection section 606 has streamlined body defined by two lateral surfaces joined in a smooth round transition at a leading edge and ending at a small radius/sharp angle at a trailing edge. Upstream of the trailing edge vortex generators may be located. The nozzles 604 are located on the trailing edge of the streamlined body of the injection sections 606.

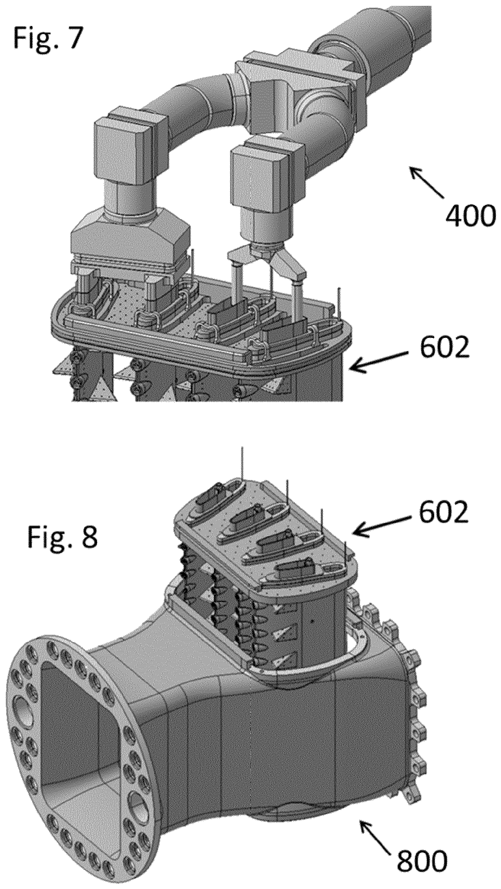

Figure 7 shows in more detail a connection between the injection head 602 and the outlets of the dividers 414, showing that every injection section 606 is connected to one outlet of the dividers 414.

Figure 8 shows a rectangular type burner 800 adapted to be used with the dual fuel delivery system 400 according to the invention. As shown, the burner 800 is adapted to receive the injection head 602.

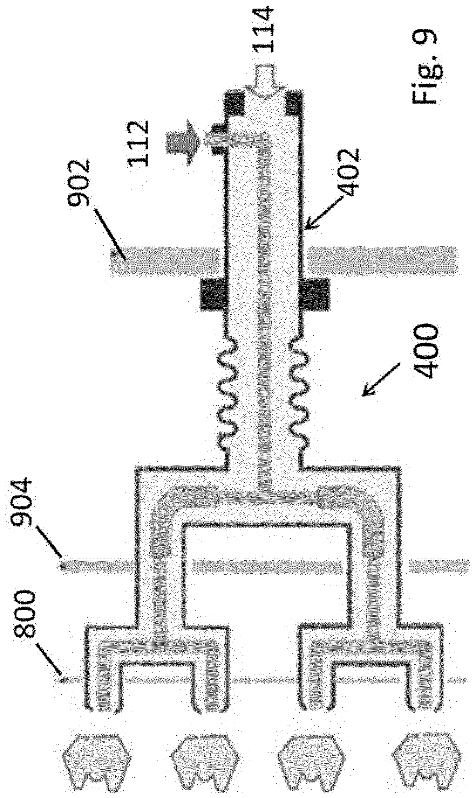

The present invention also discloses a gas turbine engine 100 adapted to be used with the dual fuel delivery system 400 according to the invention. Figure 9 shows schematically a representation of the part of the gas turbine 100, wherein only parts of the walls of the main components are shown. As shown in figure 9, gas turbine 100 according to the invention, preferably comprises a can combustor 902, a cooling air housing 904, and a burner 800 adapted to receive the injection head 602. In one preferred embodiment, the inlet of the main fuel line 402 is positioned outside the can housing 902; the outlet of the main fuel line 402 and the inlet to the first fuel divider 408 are positioned between the can housing 902 and the cooling air housing 904. The outlets of the second fuel dividers are positioned inside the burner 800.

### List of designations:

- 100: Gas turbine engine
- 102: Compressor
- 104: Turbine
- 106: Combustor
- 110: Load
- 112: Fuel oil
- 114: Fuel gas
- 116: Inlet air
- 118: Compressed air
- 120: Combustion gas
- 122: Shaft
- 200: Fuel delivery system
- 202: Fuel ring pipe
- 204: Fuel ring pipe
- 206: Fuel feed
- 300: Dual fuel supply system
- 302: Fuel
- 304: Fuel
- 306: Fuel line
- 308: Fuel line
- 310: Nozzle
- 312: Burner
- 400: Dual fuel delivery system
- 402: Main fuel line
- 404: Main fuel gas conduit
- 406: Main fuel oil conduit
- 408: First fuel divider
- 410: First fuel gas divider
- 412: First fuel oil divider
- 414: Second fuel divider
- 416: Second divider outlet
- 418: Main fuel line inlet
- 420: Second fuel oil divider
- 422: Second fuel gas divider
- 424: Bellow
- 426: Metallic hose
- 506: Fuel manifold
- 508: Fuel oil inlet
- 510: Fuel gas inlet
- 602: Injection head
- 604: Injection nozzles
- 606: Fuel injection section
- 800: Burner
- 902: Can combustor
- 904: Cooling air housing

## Claims

1. A dual fuel delivery system (400) for a gas turbine, comprising:
a main fuel line (402) having a main fuel oil conduit (406) and a main fuel gas conduit (404), wherein the main fuel gas conduit (404) encloses, at least partially, the main fuel oil conduit (406); and a first fuel divider (408) having a first fuel oil divider (412) connected to the main fuel oil conduit (406) and a first fuel gas divider (410) connected to the main fuel gas conduit (404), wherein the first fuel gas divider (410) encloses, at least partially, the first fuel oil divider (412); the first fuel divider (408) having one inlet and two outlets; the dual fuel delivery system being **characterized by** further comprising:
two second fuel dividers (414), each of which has a second fuel oil divider (420) and a second fuel gas divider (422), and wherein the outlets of the first fuel divider (408) are connected to a respective inlet of a respective second fuel divider(414); and
an injection head (602), the injection head (602) comprises at least one injection nozzle (604) adapted to inject a fuel oil (112) and/or a fuel gas (114), wherein the injection head (602) is connected to the second fuel dividers (414).

2. The dual fuel delivery system of claim 1, wherein the first fuel divider (408) is positioned in a first plane and the second fuel divider (414) is positioned in a second plane, and wherein the first plane is different from the second plane.

3. The dual fuel delivery system of any of the preceding claims, wherein both the first fuel oil divider (412) and the first fuel gas divider (408), have one inlet and two outlets.

4. The dual fuel delivery system of any of the preceding claims, wherein the main fuel gas conduit (404) comprises an extension means (424).

5. The dual fuel delivery system of claim 4, wherein the expansion means comprises a bellow (424).

6. The dual fuel delivery system of any of the preceding claims, wherein the first fuel oil divider (412) comprises at least one extension means (426).

7. The dual fuel delivery system of any of the preceding claims, wherein a connection between the main fuel oil conduit (406) and the first fuel oil divider (412) comprises a horizontal sliding guide (504), and/or wherein a connection between the first fuel oil divider (412) and the second fuel oil divider (414) comprises a vertical sliding guide (502).

8. The dual fuel delivery system of claim 7, wherein the injection head (602) comprises plurality of injection sections (606), and wherein every injection section (606) is connected to one outlet of the second fuel divider (414).

9. The dual fuel delivery system of any of the preceding claims, further comprising fuel manifold (506) connected to the inlet of the main fuel line (402), and adapted to supply the fuel gas (114) and the fuel oil (112) to the main fuel line (402).

10. A gas turbine (100) comprising the dual fuel delivery system (400) of any of the preceding claims.

11. The gas turbine of claim 10 further comprising a can combustor (902), a cooling air housing (904), and a burner (800), wherein the inlet of the main fuel line (402) is positioned outside the can combustor (902), the outlet of the main fuel line (402) and the inlet to the first fuel divider (408) are positioned between the can combustor (902) and the cooling air housing (904).

12. A Method for delivering dual fuel (112,114) to the burner (800) of the gas turbine of claim 11, the method comprising steps:
supplying the fuel oil (112) and/or the fuel gas (114) to the main fuel line (402);
dividing the fuel oil (112) and/or the fuel gas (114) in the first fuel divider (408); and
further dividing the fuel oil (112) and/or the fuel gas (114) already divided in the first fuel divider (408) by means of at least the second fuel divider (414);
guiding the fuel oil (112) and/or the fuel gas (114) to the burner (800).

## Patentansprüche

1. Duales Brennstoffzufuhrsystem (400) für eine Gasturbine, umfassend:
eine Hauptbrennstoffleitung (402) mit einer Hauptheizölleitung (406) und einer Hauptheizgasleitung (404), wobei die Hauptheizgasleitung (404) wenigstens teilweise die Hauptheizölleitung (406) umschließt; und
einen ersten Brennstoffverteiler (408) mit einem ersten Heizölverteiler (412), der mit der Hauptheizölleitung (406) verbunden ist, und einem ersten Heizgasverteiler (410), der mit der Hauptheizgasleitung (404) verbunden ist, wobei der erste Heizgasverteiler (410) wenigstens teilweise den ersten Heizölverteiler (412) umschließt; wobei der erste Brennstoffverteiler (408) einen Einlass und zwei Auslässe aufweist;
wobei das duale Brennstoffzufuhrsystem **dadurch**
**gekennzeichnet ist, dass** es ferner umfasst:
zwei zweite Brennstoffverteiler (414), von denen jeder einen zweiten Heizölverteiler (420) und einen zweiten Heizgasverteiler (422) aufweist, und wobei die Auslässe des ersten Brennstoffverteilers (408) mit einem jeweiligen Eingang eines jeweiligen zweiten Brennstoffverteilers (414) verbunden sind; und
einen Einspritzkopf (602), wobei der Einspritzkopf (602) wenigstens eine Einspritzdüse (604) umfasst, die dazu ausgelegt ist, ein Heizöl (112) und/oder ein Heizgas (114) einzuspritzen,
wobei der Einspritzkopf (602) mit den zweiten Brennstoffverteilern (414) verbunden ist.

2. Duales Brennstoffzufuhrsystem nach Anspruch 1, wobei der erste Brennstoffverteiler (408) in einer ersten Ebene angeordnet ist und der zweite Brennstoffverteiler (414) in einer zweiten Ebene angeordnet ist, und wobei die erste Ebene verschieden von der zweiten Ebene ist.

3. Duales Brennstoffzufuhrsystem nach einem der vorangehenden Ansprüche, wobei sowohl der erste Heizölverteiler (412) als auch der erste Heizgasverteiler (408) einen Einlass und zwei Auslässe aufweisen.

4. Duales Brennstoffzufuhrsystem nach einem der vorangehenden Ansprüche, wobei die Hauptheizgasleitung (404) ein Dehnungsmittel (424) umfasst.

5. Duales Brennstoffzufuhrsystem nach Anspruch 4, wobei das Dehnungsmittel einen Faltenbalg (424) umfasst.

6. Duales Brennstoffzufuhrsystem nach einem der vorangehenden Ansprüche, wobei der erste Heizölverteiler (412) wenigstens ein Dehnungsmittel (426) umfasst.

7. Duales Brennstoffzufuhrsystem nach einem der vorangehenden Ansprüche, wobei eine Verbindung zwischen der Hauptheizölleitung (406) und dem ersten Heizölverteiler (412) eine horizontale Gleitführung (504) umfasst, und/oder wobei eine Verbindung zwischen dem ersten Heizölverteiler (412) und dem zweiten Heizölverteiler (414) eine vertikale Gleitführung (502) umfasst.

8. Duales Brennstoffzufuhrsystem nach Anspruch 7, wobei der Einspritzkopf (602) mehrere Einspritzabschnitte (606) umfasst, und wobei jeder Einspritzabschnitt (606) mit einem Auslass des zweiten Brennstoffverteilers (414) verbunden ist.

9. Duales Brennstoffzufuhrsystem nach einem der vorangehenden Ansprüche, ferner einen Brennstoffsammler (506) umfassend, der mit dem Einlass der Hauptbrennstoffleitung (402) verbunden ist und dazu ausgelegt ist, das Heizgas (114) und das Heizöl (112) der Hauptbrennstoffleitung (402) zuzuführen.

10. Gasturbine (100), das duale Brennstoffzufuhrsystem (400) nach einem der vorangehenden Ansprüche umfassend.

11. Gasturbine nach Anspruch 10, ferner eine Becherbrennkammer (902), ein Kühlluftgehäuse (904) und einen Brenner (800) umfassend, wobei der Einlass der Hauptbrennstoffleitung (402) außerhalb der Becherbrennkammer (902) angeordnet ist, der Auslass der Hauptbrennstoffleitung (402) und der Einlass in den ersten Brennstoffverteiler (408) zwischen der Becherbrennkammer (902) und dem Kühlluftgehäuse (904) angeordnet sind.

12. Verfahren zum Zuführen von dualem Brennstoff (112, 114) zu dem Brenner (800) der Gasturbine nach Anspruch 11, wobei das Verfahren die Schritte umfasst:
Zuführen des Heizöls (112) und/oder des Heizgases (114) zu der Hauptbrennstoffleitung (402);
Verteilen des Heizöls (112) und/oder des Heizgases (114) in dem ersten Brennstoffverteiler (408); und
weiteres Verteilen des Heizöls (112) und/oder des Heizgases (114), die bereits im ersten Brennstoffverteiler (408) verteilt worden sind, mittels wenigstens des zweiten Brennstoffverteilers (414); und
Leiten des Heizöls (112) und/oder des Heizgases (114) zu dem Brenner (800).

## Revendications

1. Système de distribution bicarburant (400) pour une turbine à gaz, comprenant :
une conduite de carburant principal (402) ayant un conduit de fioul principal (406) et un conduit de gaz combustible principal (404), dans lequel le conduit de gaz combustible principal (404) enferme, au moins partiellement, le conduit de fioul principal (406) ; et un premier diviseur de combustible (408) ayant un premier diviseur de fioul (412) raccordé au conduit de fioul principal (406) et un premier diviseur de gaz combustible (410) raccordé au conduit de gaz combustible principal (404), dans lequel le premier diviseur de gaz combustible (410) enferme, au moins partiellement, le premier diviseur de fioul (412) ; le premier diviseur de fioul (408) ayant une entrée et deux sorties ; le système de distribution bicarburant étant **caractérisé en ce qu'**il comprend en outre :
deux seconds diviseurs de combustible (414), dont chacun a un second diviseur de fioul (420) et un second diviseur de gaz combustible (422), et dans lequel les sorties du premier diviseur de combustible (408) sont raccordées à une entrée respective d'un second diviseur de combustible (414) respectif ; et
une tête d'injection (602), la tête d'injection (602) comprend au moins une buse d'injection (604) adaptée pour injecter un fioul (112) et/ou un gaz combustible (114), dans lequel la tête d'injection (602) est raccordée aux seconds diviseurs de combustible (414).

2. Système de distribution bicarburant selon la revendication 1, dans lequel le premier diviseur de combustible (408) est positionné dans un premier plan et le second diviseur de combustible (414) est positionné dans un second plan, et dans lequel le premier plan est différent du second plan.

3. Système de distribution bicarburant selon l'une quelconque des revendications précédentes, dans lequel à la fois le premier diviseur de fioul (412) et le premier diviseur de gaz combustible (408), ont une entrée et deux sorties.

4. Système de distribution bicarburant selon l'une quelconque des revendications précédentes, dans lequel le conduit de gaz combustible principal (404) comprend un moyen d'extension (424).

5. Système de distribution bicarburant selon la revendication 4, dans lequel le moyen d'expansion comprend un soufflet (424).

6. Système de distribution bicarburant selon l'une quelconque des revendications précédentes, dans lequel le premier diviseur de fioul (412) comprend au moins un moyen d'extension (426).

7. Système de distribution bicarburant selon l'une quelconque des revendications précédentes, dans lequel un raccordement entre le conduit de fioul principal (406) et le premier diviseur de fioul (412) comprend un guide de coulissement horizontal (504), et/ou dans lequel un raccordement entre le premier diviseur de fioul (412) et le second diviseur de fioul (414) comprend un guide de coulissement vertical (502).

8. Système de distribution bicarburant selon la revendication 7, dans lequel la tête d'injection (602) comprend une pluralité de sections d'injection (606), et dans lequel chaque section d'injection (606) est raccordée à une sortie du second diviseur de combustible (414).

9. Système de distribution bicarburant selon l'une quelconque des revendications précédentes, comprenant en outre un collecteur de combustible (506) raccordé à l'entrée de la conduite de combustible principal (402), et adapté pour amener le gaz combustible (114) et le fioul (112) à la conduite de combustible principal (402).

10. Turbine à gaz (100) comprenant le système de distribution bicarburant (400) selon l'une quelconque des revendications précédentes.

11. Turbine à gaz selon la revendication 10, comprenant en outre une chambre de combustion tubulaire (902), un boîtier d'air de refroidissement (904), et un brûleur (800), dans laquelle l'entrée de la conduite de combustible principal (402) est positionnée à l'extérieur de la chambre de combustion tubulaire (902), la sortie de la conduite de combustible principal (402) et l'entrée au premier diviseur de combustible (408) sont positionnées entre la chambre de combustion tubulaire (902) et le boîtier d'air de refroidissement (904).

12. Procédé pour distribuer deux carburants (112, 114) au brûleur (800) de la turbine à gaz selon la revendication 11, le procédé comprenant les étapes consistant à :
amener le fioul (112) et/ou le gaz combustible (114) à la conduite de combustible principal (402) ;
diviser le fioul (112) et/ou le gaz combustible (114) dans le premier diviseur de combustible (408) ; et
diviser en outre le fioul (112) et/ou le gaz combustible (114) déjà divisés dans le premier diviseur de combustible (408) au moins au moyen du second diviseur de combustible (414) ;
guider le fioul (112) et/ou le gaz combustible (114) vers le brûleur (800).
